## Europäisches Patentamt

## European Patent Office

## Office européen des brevets

(11) Veröffentlichungsnummer: **0 180 699**
**B1**

(12) **EUROPÄISCHE PATENTSCHRIFT**

(45) Veröffentlichungstag der Patentschrift:
23.11.88

(51) Int. Cl.⁴: **B 60 J 3/02**

(21) Anmeldenummer: **85101781.4**

(22) Anmeldetag: **19.02.85**

(54) Sonnenblende für Fahrzeuge.

(30) Priorität: **09.11.84 DE 3440976**

(43) Veröffentlichungstag der Anmeldung:
**14.05.86 Patentblatt 86/20**

(45) Bekanntmachung des Hinweises auf die Patenterteilung:
**23.11.88 Patentblatt 88/47**

(84) Benannte Vertragsstaaten:
**DE FR GB IT SE**

(56) Entgegenhaltungen:
**EP-A-0 099 968**
**EP-A-0 180 700**
**WO-A-83/00846**
**DE-A-2 420 264**
**DE-A-3 322 736**
**FR-A-1 513 851**
**FR-A-2 394 377**

(73) Patentinhaber: **Gebr. Happich GmbH, Postfach 10 02 49 Clausenbrücke 1, D-5600 Wuppertal 1 (DE)**

(72) Erfinder: **Ebert, Charles, 7, Rue du Parc, F-70300 Luxeuil (FR)**
Erfinder: **Lecorvaisier, René, 2, rue du Collège, F-57470 Hombourg- Haut (FR)**
Erfinder: **Menschaert, Josef, Leistraat 37, B-9451 Haaltert (BE)**
Erfinder: **Viertel, Lothar, Jutta von Hattstein-Strasse 41, D-6636 Berus Überherrn (DE)**

## Beschreibung

Die Erfindung bezieht sich auf eine Sonnenblende für Fahrzeuge der im Oberbegriff des Patentanspruchs 1 angegebenen Art.

Sonnenblendenkörper herkömmlicher Sonnenblenden, wie sie z. B. durch die WO-A-83/00 846 bekannt geworden sind, weisen im allgemeinen eine aus einem Drahtrahmen bestehende Verstärkungseinlage und an einem Endbereich eines Längsrandes einen darin eingelagerten ersten Lagerbock mit einer Lagerbohrung für eine darin einendig eingelassene, anderendig von einem Schwenklager aufgenommene Lagerachse und am anderen Endbereich desselben Längsrandes einen darin eingelassenen zweiten Lagerbock mit zwei Stecköffnungen für die beidendige Aufnahme eines eine Ausnehmung des Sonnenblendenkörpers überquerenden, etwa parallel zum Längsrand ausgerichteten Lagerzapfens auf, der lösbar in die Lageraufnahme eines Gegenlagers einrastbar ist. Die Lagerböcke sind auf den Drahtrahmen aufgeklipst oder, wie es weiterhin bekannt ist, unmittelbar auf den Drahtrahmen aufgespritzt. Es sind auch Sonnenblenden bekannt, die lediglich einen eingelagerten Lagerbock und lediglich eine darin eingesetzte Lagerachse aufweisen.

Die aus Drahtrahmen und Lagerkörpern bestehende Einheit ist bei Sonnenblendenkörpern herkömmlicher Art in einem außenseitig mit einer Umhüllungsfolie versehenen Polstermaterial eingebettet. Als Polstermaterial wird Schnittschaum oder Formschaum eingesetzt. Unter Schnittschaum-Polster werden Zuschnitte aus Kunststoffschaumbahnen verstanden, die beidseitig auf die Verstärkungseinlage nebst Lagerböcken aufgelegt und durch die Umhüllungsfolie, die im allgemeinen umlaufend randverschweißt wird, zusammengehalten werden. Von Sonnenblendenkörpern aus Formschaum wird gesprochen, wenn die Verstärkungseinlage nebst Lagerböcken in eine Schäumform eingelegt und mit Kunststoffmaterial umschäumt wird, wobei der dadurch gebildete Schäumling im allgemeinen ebenfalls mit einer Umhüllungsfolie verkleidet wird.

Bei der Herstellung von im wesentlichen aus Formschaum bestehenden Sonnenblendenkörpern ergeben sich aber große Probleme im Bereich der Lagerböcke, weil es infolge des Schaumdruckes schwierig ist, die Lagerböcke bzw. die Lagerbohrung und Stecköffnungen derselben schaumfrei zu halten. Das bisher vorgenommene Abdichten der möglichen Schaumeindringstellen durch Klebeband, oder dgl. stellt, weil es zeit- und arbeitsaufwendig und letztendlich auch nicht besonders zuverlässig ist, keine auf die Dauer zufriedenstellende Lösung dar.

Der Erfindung liegt nun die Aufgabe zugrunde, eine Sonnenblende der eingangs näher geschilderten Art in bezug auf die Lagerböcke zu verbessern und die Lagerböcke derart zu gestalten, daß beim Schäumen des Sonnenblendenkörpers ein Eindringen von Schaummaterial in das Innere der Lagerböcke verhindert wird, wobei weiterhin angestrebt wird, eine besonders einfache und kostengünstige Lösung aufzuzeigen.

Zur Lösung dieser Aufgabe ist erfindungsgemäß die im kennzeichnenden Teil des Patentanspruchs 1 angegebene Merkmalskombination vorgesehen. Durch diese erfindungsgemäße Maßnhme wird in erster Linie erreicht, daß kein Schaummaterial beim Schäumen des Sonnenblendenkörpers in die Lagerbohrung und in die Stecköffnungen eindringen kann. In zweiter Linie wird erreicht, daß die Lagerböcke und die damit verbundene Verstärkungseinlage mit Hilfe der Materialansätze lagegenau in einer Schäumform eingespannt werden können. Die aus dem fertiggestellten Schäumling herausragenden Materialansätze können leicht erfaßt, von den Lagerböcken abgetrennt und ggf. einer Wiederverwendung zugeführt werden.

Die Materialansätze erstrecken sich mit Vorteil in Achsrichtung der Lagerbohrung und der Stecköffnungen.

Vorteilhafterweise weisen die Materialansätze einen dem Innendurchmesser der Lagerbohrung und den Stecköffnungen entsprechenden Innendurchmesser auf. Diese Maßnahmen sind bei einem Lagerbock mit zwei Stecköffnungen für die Aufnahme eines sich parallel zu den Längskanten des Sonnenblendenkörpers erstreckenden Lagerzapfens besonders vorteilhaft, weil zwei Stecköffnungen gleichzeitig gegen ein Eindringen von Schaummaterial abgekapselt werden. Bei der Herstellung eines Lagerbocks mit zwei Stecköffnungen kann eine der Stecköffnungen als Sackloch ausgebildet werden, während die zweite Stecköffnung an dem von dem Materialansatz abgewandten Endbereich durch einen darin einzupressenden Stopfen oder dgl. bleibend zu verschließen ist. Nach dem Schäumvorgang ist der sich zwischen den Stecköffnungen befindliche rohrartige Materialansatz lediglich herauszutrennen, was mit einer Trennvorrichtung schnell und einfach zu bewerkstelligen ist.

Eine Weiterbildung der Erfindung kann darin bestehen, daß am Übergangsbereich zwischen den Lagerböcken und den Materialansätzen jeweils eine ringförmige Einschnürung als Sollbruchstelle ausgebildet ist. Aufgrund dieser Maßnahmen läßt sich der Materialansatz nach Erfüllung seiner Schutzfunktion durch einfaches Wegbrechen wieder vom Lagerbock entfernen.

Ausführungsbeispiele der Erfindung werden nachfolgend anhand der Zeichnungen näher erläutert. Sie zeigen:

Fig. 1 eine komplette Sonnenblende in Ansicht,

Fig. 2 die Versteifungseinlage und die damit verbundenen Lagerböcke der Sonnenblende nach Fig. 1,

Fig. 3 einen Schnitt durch den in Fig. 1 und 2 links dargestellten Lagerbock,

Fig. 4 einen Schnitt durch einen gegenüber Fig. 3 abgewandelten Lagerbock,

Fig. 5 einen Schnitt durch den in Fig. 1 und 2 rechts dargestellten Lagerbock und

Fig. 6 einen Lagerbock in einer gegenüber Fig. 5 abgewandelten Ausführungsform.

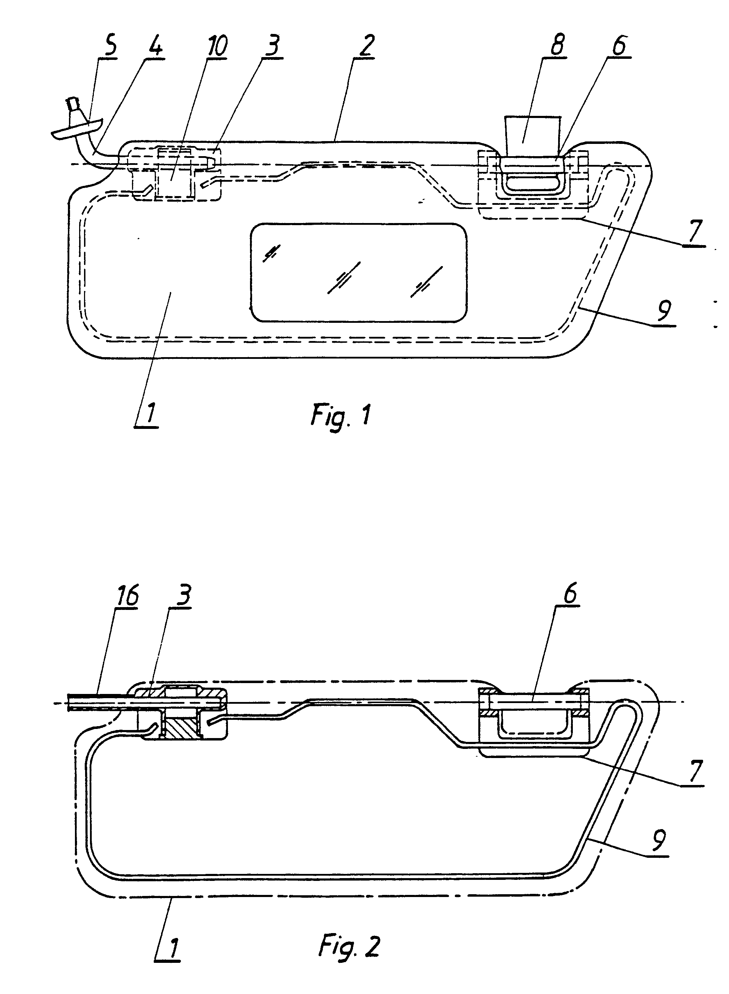

Die Sonnenblende nach Fig. 1 besteht aus einem Sonnenblendenkörper 1, an dessen oberer Längskante 2 ein Schwenklager, welches aus einem Lagerbock 3, einer darin eingesetzten L-förmigen Sonnenblendenachse 4 und einem den kurzen Schenkel der Sonnenblendenachse 4 aufnehmenden, an der Fahrzeugkarosserie zu befestigenden Lagergehäuse 5 besteht, an einem Endbereich angeordnet ist. Am anderen Endbereich derselben Längskante 2 sitzt ein aus Gegenlagerachse 6 und Lagerbock 7 bestehendes Gegenlager, wobei die Gegenlagerachse 6 lösbar in die Lageraufnahme eines an der Fahrzeugkarosserie zu befestigenden Gegenlagergehäuse 8 einrastbar ist. Die Lagerböcke 3 und 7 sind im Sonnenblendenkörper 1 eingelagert und mit einer den Sonnenblendenkörper aussteifenden Verstärkungseinlage 9, die zweckmäßigerweise aus einem Drahtrahmen besteht, verbunden. Dabei kann jeweils eine Klipsverbindung oder auch vorgesehen sein, die Lagerböcke 3 und 7 unmittelbar an die Verstärkungseinlage 9 anzuspritzen. Der Lagerbock 3 weist noch eine nach außen abgekapselt aufgenommene Feder 10 auf, die den langen Schenkel der Sonnenblendenachse radial spannt.

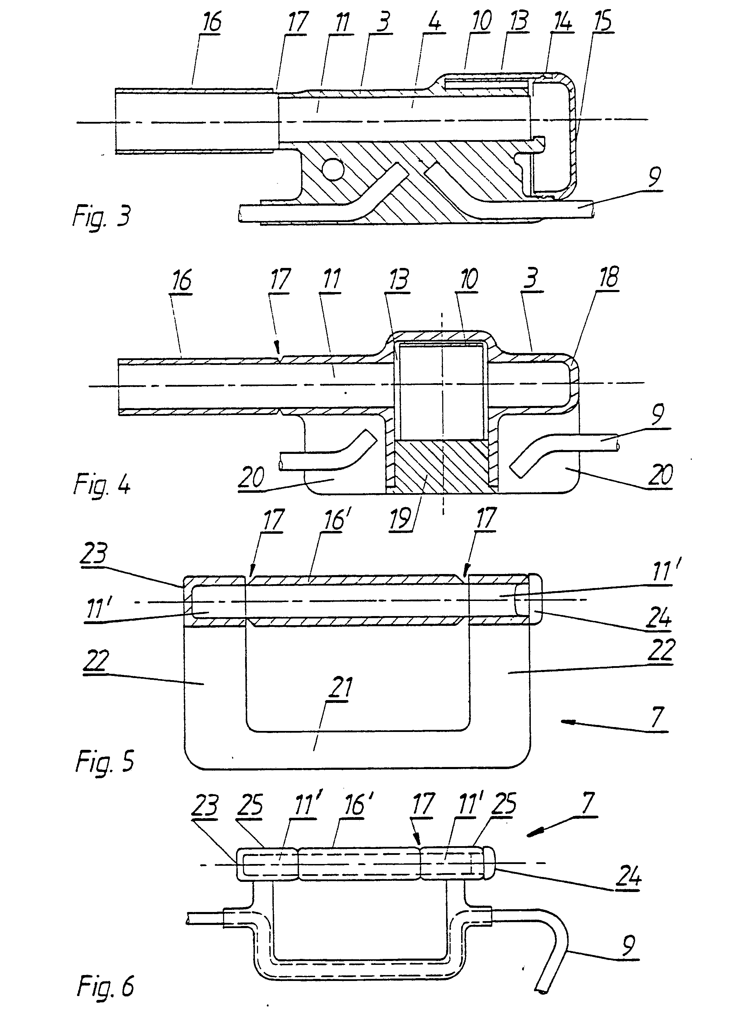

Fig. 3 zeigt nun eine besondere Ausbildung des Lagerbocks 3, welcher aus einem blockförmigen Kunststoff-Spritzgußteil besteht und durch unmittelbares Aufspritzen unlösbar mit der Verstärkungseinlage 9 verbunden ist. Der Lagerbock 3 weist im oberen Bereich eine durchlaufende Lagerbohrung 11 zur drehbeweglichen Aufnahme des langen Schenkels der Sonnenblendenachse 4 auf. An dem in Einsteckrichtung der Sonnenblendenachse 4 gesehen hinteren Stirnende ist der Lagerbock 3 mit einer nur von diesem Stirnende her zugänglichen Stecköffnung 13 ausgebildet, die zur Aufnahme der U-förmig gebogenen Feder 10 dient. Die Stecköffnung 13 geht im Bereich der Federschenkel in die Stecköffnung 11 über, so daß die Federschenkel die Sonnenblendenachse 4 radial spannen können. Am Stirnende des Lagerbocks 3 ist umfangsseitig ein überstehender Kragen 14 angeformt, der innenseitig eine umlaufende Nut aufweist. In die durch den Kragen 14 gebildete Öffnung ist die offene Seite einer napfförmigen Kappe 15 eingesteckt und arretiert, wobei die Arretierung über einen außenseitig an der Kappenwandung angeformten, in die Nut des Kragens 14 einrastenden Wulst erfolgt. Durch die Kappe 15 wird das hintere Ende der Lagerbohrung 11 verschlossen und die Feder 10 völlig eingekapselt.

In Fig. 3 ist insbesondere weiterhin gezeigt, daß die Lagerbohrung 11 vorderseitig durch einen am Lagerbock 13 angeformten rohrförmigen Materialansatz 16 verlängert ist. Am Übergangsbereich zwischen dem Lagerbock 3 und dem Materialansatz 16 ist eine ringförmige Einschnürung 17 oder nur eine als dünne Haut ausgebildete Anbindung vorgesehen, die als Sollbruchstelle dient. Der Materialansatz 16 dient zunächst, ebenso wie die Kappe 15, dazu, ein Eindringen von Schaummaterial in das Innere des Lagerbocks 3 beim Umschäumen des Lagerbocks 3 zu verhindern. Weiterhin kann der Materialansatz 16 aber auch mit Vorteil dazu benutzt werden, die aus Lagerbock 3 und Lagerbock 7 sowie der Verstärkungseinlage 9 bestehende Einheit lagegenau ausgerichtet in der Schäumform zu halten, indem lediglich der Materialansatz 16 eingespannt wird. Sobald der Sonnenblendenkörper 1 fertiggestellt ist, wird der Materialansatz 16 durch Wegbrechen von diesem bzw. vom Lagerbock 3 entfernt.

Fig. 4 zeigt einen Lagerbock 3 in einer gegenüber dem nach Fig. 3 abgewandelten Ausführungsform. Hier ist die Lagerbohrung 11 für die Sonnenblendenachse 4 einendig (bei 18) geschlossen ausgebildet. Die Feder 10 sitzt in einem Sockel 19 und zusammen mit diesem in einer Stecköffnung 13, die senkrecht zur Lagerbohrung 11 für die Sonnenblendenachse 4 ausgerichtet ist. Auch besitzt der Lagerbock 3 nach Fig. 4 Klipsaufnahmen 20 für die Verstärkungseinlage 9, deren konstruktiver Aufbau allerdings nicht näher dargestellt ist. Der Lagerbock 3 nach Fig. 4 weist einen rohrförmigen Materialansatz 16 auf, dessen Anbindung am Lagerbock 3 in der anhand von Fig. 3 erläuterten Weise vorgenommen worden ist und der auch am Übergangsbereich zum Lagerbock 3 eine ringförmig umlaufende Einschnürung 17 als Sollbruchstelle aufweist.

Ein erstes Ausführungsbeispiel des in Fig. 1 und 2 nur angedeuteten Lagerbocks 7 zeigt Fig. 5 in einem Teilschnitt. Dieser Lagerbock 7 weist eine U-Form auf und besteht aus dem Steg 21 und den Schenkeln 22, deren Endbereich mit Stecköffnungen 11' zum Einsetzen der Gegenlagerachse 6 ausgebildet sind. Damit nun in die Stecköffnungen 11' beim Schäumvorgang kein Schaummaterial eindringen kann, sind die Lochränder der einander gegenüberliegenden Stecköffnungen 11' mit einem, auch hier rohrförmig ausgebildeten Materialansatz 16' miteinander verbunden. Die auf der Zeichnung links dargestellte Stecköffnung 11' ist durch einen angeformten Boden 23 verschlossen, während die rechts dargestellte Stecköffnung 11', zwecks Abkapselung derselben, mit einem eingepreßten Stopfen 24 verschlossen ist. Nach dem Umschäumen des Lagerbocks 7 wird der Materialansatz 16' durch Wegbrechen oder mittels Einsatz einer Trennvorrichtung (Säge oder dgl.) entfernt. Sobald der Sonnenblendenkörper 1 mit einer Hüllfolie versehen worden ist, kann die Gegenlagerachse 6 in die Stecköffnungen 11' eingebracht werden. Durch dieses nachträgliche Einsetzen der Gegenlagerachse 6 wird ein besonders sauberer Abschluß zwischen dieser und der Hüllfolie erzielt.

Fig. 6 zeigt eine zweite Variante des Lagerbocks 7, der hier unmittelbar an die Verstärkungseinlage 9 angespritzt ist. Auch hier sind, in der vorbeschriebenen Weise, die die Stecköffnungen 11' aufweisenden Lageraugen 25 durch einen rohrförmigen Materialansatz 16' miteinander verbunden und auch die hier links dargestellte Stecköffnung 11' weist einen Boden 23 und die andere einen Stopfen 24 auf. Die Stecköffnungen 11' und der Materialansatz 16' weisen jeweils eine durchmessergleiche Innenöffnung auf.

## Patentansprüche

1. Sonnenblende für Fahrzeuge mit einem aus aufgeschäumten Kunststoff bestehenden, eine eingelagerte Verstärkungseinlage (9) aufweisenden Sonnenblendenkörper (1), der an einem Endbereich eines seiner Längsränder (2) einen ersten im Schaummaterial eingelagerten, mit der Verstärkungseinlage (9) verbundenen, als Kunststoff-Spritzgußteil ausgebildeten Lagerblock (3) mit einer Lagerbohrung (11) zur Aufnahme einer Sonnenblendenachse (4) sowie einer die Sonnenblendenachse (4) klemmenden Feder 10 trägt und der am anderen Endbereich desselben Längsrandes (2) einen zweiten im Schaummaterial eingelagerten, mit der Verstärkungseinlage (9) verbundenen, als Kunststoff-Spritzgußteil ausgebildeten Lagerbock (7) mit zwei Stecköffnungen (11) zur Aufnahme einer sich parallel zum Längsrand (2) erstreckenden, eine Ausnehmung im Längsrand querenden Gegenlagerachse (6) aufweist, dadurch gekennzeichnet, daß an den ersten Lagerbock (3) ein sich an den Rand der Lagerbohrung (11) anschließender, aus dem Sonnenblendenkörper (1) herausragender, vor dem Einstecken der Sonnenblendenachse (4) wieder entfernbarer, rohrstutzenartiger Materialansatz (16) angeformt ist, daß an die Lochränder der Stecköffnungen (11') des zweiten Lagerbocks (7) ein rohrartiger, dieselben miteinander verbindender, vor dem Einstecken der Gegenlagerachse (6) wieder entfernbarer Materialansatz (16') angeformt ist und daß die Stecköffnungen (11') des zweiten Lagerbocks (7) an den dem Materialansatz (16') abgewandten Enden verschlossen sind und zwar ein Ende durch einen angeformten Boden (23) und das andere Ende durch einen eingesteckten Stopfen (24).

2. Sonnenblende nach Anspruch 1, dadurch gekennzeichnet, daß sich die Materialansätze (16, 16') in Achsrichtung der Lagerbohrung (11) und der Stecköffnungen (11') erstrecken.

3. Sonnenblende nach Anspruch 1 oder 2 dadurch gekennzeichnet, daß der eine Materialansatz (16) einen dem Durchmesser der Lagerbohrung (11) entsprechenden Innendurchmesser aufweist und daß der andere Materialansatz (16') einen Innendurchmesser aufweist, der dem der Stecköffnungen (11') entspricht.

4. Sonnenblende nach einem oder mehreren der Ansprüche 1 bis 3, dadurch gekennzeichnet, daß am Übergangsbereich zwischen den Lagerböcken (3, 7) und den Materialansätzen (16, 16') jeweils ringförmige Einschnürungen (17) als Sollbruchstellen ausgebildet sind.

## Claims

1. A sun visor for a vehicle, the visor comprising a sun visor body (1) made of a foamed plastics material and embedding a reinforcing insert (9), in which the visor body carries in one end portion of one of its longitudinal edges (2) a first bearing bracket (3) - which is a plastics injection-moulded component embedded in the foamed material, is connected to the reinforcing insert (9) and has a bore (11) for holding a sun visor shaft (4) - and also a spring (10) for clamping the visor shaft (4), and in which the visor body is provided in the other end portion of the sane longitudinal edge (2) with a second hearing bracket (7), which is also a plastics injection-moulded component embedded in the foamed material, is also connected to the reinforcing insert (9) and includes two plug-in holes (11) serving to hold an outerbearing shaft (6) extending parallel with the longitudinal edge (2) and traversing a recess formed therein, characterized in that a sleevelike material extension (16) adjoining the edge of the bore (11) and protruding out of the visor body (1) is moulded onto the first bearing bracket (3) yet removable therefrom prior to the visor shaft's (4) insertion thereinto, that a tubular material extension (16') connecting the edges of the second bearing bracket's (7) plug-in holes (11') is moulded onto said edges yet is removable therefrom prior to the outer- bearing shaft's (6) insertion into said holes, and in that the plug-in holes (11') of the second bearing bracket (7) at their respective ends remote from the extension (16') are sealed, that is to say the one end by an integrally formed bottom (23) and the other by a stopper (24) inserted thereinto.

2. A sun visor according to claim 1, characterized in that the extensions (16, 16') run in the axial direction of the bore (11) and plug-in holes (11').

3. A sun visor according to claim 1 or claim 2, characterized in that the internal diameter of the one extension (16) corresponds to that of the bore (11) and the internal diameter of the other extension (16') to that of the plug-in holes (11').

4. A sun visor according to any one or more of the claims 1 to 3, characterized in that each transitional region bewteen the bearing brackets (3, 7) and their respective extensions (16, 16') is formed with an annular waist (17) serving as a preset break-off point.

## Revendications

1. Pare-soleil pour véhicules automobiles comprenant un corps de pare-soleil (1) constitué en une matière plastique moulée par injection et comportant une garniture de renforcement (9) incorporée à l'intérieur, le corps de pare-soleil supportant dans une région d'extrémité de l'un de ses bords longitudinaux (2) un premier palier (3) incorporé dans le matériau en mousse, relié à la garniture de renforcement (9) et constitué sous forme d'un élément en matière plastique moulé par injection, avec un alésage de palier (11) pour recevoir un axe (4) du pare-soleil, ainsi qu'un ressort (10) qui enserre l'axe (4) du pare-soleil, et qui comprend dans l'autre région d'extrémité du même bord longitudinal (2) un second palier (7) incorporé dans le matériau en mousse, relié à la garniture de renforcement (9), constitué sous forme d'un élément en matière plastique moulé par injection, comportant deux ouvertures de réception (11) destinées à la réception d'un axe de contre-palier (6) s'étendant parallèlement au bord longitudinal (2) et intersectant un évidement du bord longitudinal, caractérisé en ce qu'un élément additionnel de type tubulaire (16), se raccordant au bord de l'alésage de palier (11), faisant saillie du corps (1) du pare-soleil et pouvant être retiré avant l'enfoncement de l'axe (4) du pare-soleil, est formé sur le premier palier (3), en ce qu'un élément additionnel de type tubulaire (16') est formé sur les bords des trous des ouvertures de réception (11') du second palier (7), reliant ces dernières l'une à l'autre et pouvant être retiré avec l'enfoncement de l'axe de contre-palier (6), et en ce que les ouvertures de réception (11') du second palier (7) sont fermées aux extrémités qui sont à l'opposé de l'élément (16'), à savoir à une extrémité par un fond d'un seul tenant (23) et à l'autre extrémité par un bouchon (24) enfoncé à l'intérieur.

2. Pare-soleil selon la revendication 1, caractérisé en ce que les éléments additionnels (16, 16') s'étendent en direction de l'axe de l'alésage de palier (11) et des ouvertures de réception (11').

3. Pare-soleil selon la revendication 1 ou 2, caractérisé en ce que l'un des éléments (16) a un diamètre interne qui correspond au diamètre de l'alésage de palier (11) et en ce que l'autre élément (16') a un diamètre interne qui correspond à celui des ouvertures de réception (11').

4. Pare-soleil selon l'une ou plusieurs des revendications 1 à 3, caractérisé en ce que des affaiblissements de forme annulaire (17) formant des positions de rupture de consigne sont constitués dans les régions de transition entre les paliers (3, 7) et les éléments additionnels (16, 16').

Fig. 1

Fig. 2

Fig. 3

Fig. 4

Fig. 5

Fig. 6